# EUROPÄISCHE PATENTSCHRIFT

(11) **EP 1 014 703 B1**
(45) Veröffentlichungstag und Bekanntmachung des Hinweises auf die Patenterteilung: **30.07.2008**
(21) Anmeldenummer: 99124612.5
(22) Anmeldetag: 10.12.1999
(51) Int. Cl.: H04N 5/06

(54) **Verfahren und Vorrichtung zur Synchronisation der Bildwiederholfrequenz**
Method and device for synchronizing the image recurrence frequency
Méthode et dispositif de synchronisation de fréquence de récurrence d'image

(30) Priorität: 23.12.1998 DE 19859678
(43) Veröffentlichungstag der Anmeldung: 28.06.2000
(73) Patentinhaber: Grundig Multimedia B.V., 1083 HJ Amsterdam (NL)
(72) Erfinder: Fischbeck, Udo, c/o GRUNDIG AG, 90762 Fürth (DE); Stracke, Juergen, c/o GRUNDIG AG, 90762 Fürth (DE); Valek, Tomas, c/o GRUNDIG AG, 90762 Fürth (DE)
(74) Vertreter: Pröll, Jürgen

(56) Entgegenhaltungen:
- EP-A- 0 136 625
- WO-A-96/18263
- US-A- 5 185 603

## Beschreibung

Die Erfindung betrifft ein Verfahren und eine Vorrichtung zur Synchronisation einer von einer Schaltung zur Erzeugung digitaler Bildsignale für einen Flachbildschirm erzeugten Bildwiederholfrequenz.

Nach dem Stand der Technik sind Flachbildschirme, wie LCD- oder Plasma-Bildschirme, bekannt. Bei solchen Bildschirmen werden mittels einer Matrixansteuerung sämtliche Bildpunkte gleichzeitig angesteuert. Dazu werden die die Bildinformation enthaltenden Daten mit einer vorgegebenen Bildwiederholfrequenz über eine digitale Schnittstelle an die Matrixansteuerung übertragen. Die Bildwiederholfrequenz wird als eine Abfolge von Impulsen zusammen mit den Daten übertragen. Typische Bildwiederholfrequenzen sind z.B. 50 Hz, 60 Hz, 70 Hz und 100 Hz.

Bei bestimmten bilderzeugenden Geräten, wie Computern, hängt die Bildwiederholfrequenz von der jeweiligen Betriebsweise ab. Wird z.B. von einem unter dem Betriebssystem DOS® betriebenem Programm auf ein weiteres Programm gewechselt, welches unter dem Betriebssystem Windows® betrieben wird, so ändert sich die Bildwiederholfrequenz von 60 Hz. zum Beispiel auf 70 Hz.

Während der Änderung der Bildwiederholfrequenz werden Impulsabfolgen erzeugt, welche weder der ursprünglichen Bildwiederholfrequenz noch der gewünschten neuen Bildwiederholfrequenz entsprechen. Solche asynchronen Zwischenfrequenzen können für eine Matrixansteuerung nicht verarbeitbar sein. In diesen Fällen sperrt beispielsweise die Matrixansteuerung, um eine Beschädigung des Flachbildschirms zu verhindern.

Bedingt durch eine solche Sperrung kann es aber zu einer Beschädigung oder Zerstörung der im jeweiligen bilderzeugenden Gerät aufgenommenen Schaltung zur Erzeugung digitaler Bildsignale kommen. Zumindest bricht aber bei einer Änderung der Bildwiederholfrequenz das Bild zusammen oder wird infolge einer unkontrollierten Beeinflussung der Ansteuerlogik fehlerhaft aufgebaut.

Aufgabe der Erfindung ist es, ein Verfahren und eine Vorrichtung anzugeben, mit denen die Nachteile nach dem Stand der Technik beseitigt werden. Es sollen insbesondere ein Verfahren und eine Vorrichtung angegeben werden, die eine Änderung der Bildwiederholfrequenz bei Flachbildschirmen ermöglichen, ohne dass es dabei zu einer Beschädigung oder Zerstörung einer im bilderzeugenden Gerät aufgenommenen Schaltung oder zu einem Zusammenbruch bzw. einem fehlerhaften Aufbau des Bildes kommt.

US 4611228 offenbart eine Vorrichtung und ein Verfahren zur Synchronisation von horizontalen und vertikalen Synchronisationsimpulsen eines Videosignals, das mit Zwischenzeilenabtastung darzustellen ist, mit den horizontalen und vertikalen Synchronisationsimpulsen eines Videosignals, das ohne Zwischenzeilenabtastung darzustellen ist. Eine Phasenabweichung zwischen den horizontalen Impulsen des ersten und des zweiten Videosignals wird ermittelt und behoben. Dazu werden zwei variable Taktsignale generiert. Das erste Taktsignal, das eine höhere Frequenz aufweist, wird gemäß der Phasenabweichung reguliert. Die Frequenz des zweiten Taktsignals beträgt die Hälfte des höheren Taktsignals. Durch wahlweise Zuteilung des ersten oder des zweiten Taktsignals an einen Frequenzteiler wird eine Phasenfehlanpassung zwischen den Synchronisationspulsen beseitigt.

WO96/18263 offenbart eine Vorrichtung und ein Verfahren zur Beseitigung eines Jitters in der vertikalen Position eines zweiten Bildes auf einem ersten Bild, worin die Startposition des zweiten Bildes durch das Abzählen der horizontalen Startimpulsen nach einer vertikalen Startimpulsflanke ermittelt wird. Wenn der Zeitabstand von der vertikalen Startimpulsflanke zum nächsten horizontalen Startimpuls kleiner ist als ein vordefinierter Wert, wird die vertikale Startimpulsflanke im nächsten Frame für eine bestimmte Dauer verschoben. Wenn der Zeitabstand von der verschobenen vertikalen Startimpulsflanke zum nächsten horizontalen Startimpuls immer noch kleiner ist als ein vordefinierter Wert, wird die vertikale Startimpulsflanke im nächsten Frame so verschoben, dass der Zeitabstand von der vertikalen Startimpulsflanke zum nächsten horizontalen Startimpuls größer wird als ein vordefinierter Wert.

US5185603 offenbart eine Vorrichtung und ein Verfahren zur Synchronisation von externen Videosignalen und computergenerierten Videosignalen, worin Einrichtungen 40, 70 Zeitabweichungen zwischen horizontalen Synchronisationssignalen des externen Videosignals und des computergenerierten Videosignals bzw. Zeitabweichungen zwischen vertikalen Synchronisationssignalen des externen Videosignals und des computergenerierten Videosignals ermitteln und ein Taktsteuerungssignal generieren. Eine Computer-Video-Clock-Generator-Einheit reguliert den Computervideotakt gemäß des Taktsteuerungssignals.

Diese Aufgabe wird durch die Merkmale der Ansprüche 1 und 10 gelöst. Zweckmäßige Ausgestaltungen ergeben sich aus den Merkmalen der Ansprüche 2 bis 9 und 11 bis 17.

Durch das erfindungsgemäße Verfahren wird bei einer Änderung der Bildwiederholfrequenz die Übertragung von Zwischenfrequenzen an die Matrixansteuerung des Flachbildschirms vermieden. Eine dadurch bedingte Beschädigung der Schaltung zur Erzeugung digitaler Bildsignale wird ausgeschlossen. Der Bildaufbau bleibt bei einer Änderung der Bildwiederholfrequenz weitgehend unbeeinflusst.

Nach einer ersten Verfahrensausgestaltung fällt die zweite Zeitdifferenz in einen der Zeitdifferenzwertebereiche mit Ausnahme des die kürzesten Zeitdifferenzen enthaltenden Zeitdifferenzwertebereichs. In diesem Fall kann die vierte Zeitdifferenz in den die längsten oder einen Zeitdifferenzwertebereich mit Ausnahme des die kürzesten Zeitdifferenzen enthaltenden Zeitdifferenzwertebereichs fallen.

Nach einer zweiten Verfahrensausgestaltung kann die zweite Zeitdifferenz in den die längsten Zeitdifferenzen enthaltenden Zeitdifferenzwertebereich fallen. In diesem Fall kann die vierte Zeitdifferenz in den die längsten oder einen Zeitdifferenzwertebereich mit Ausnahme des die kürzesten Zeitdifferenzen enthaltenden Zeitdifferenzwertebereichs fallen.

Die Zeitdifferenzwertebereiche entsprechen Bereichen von Bildwiederholfrequenzen, die von der Matrixansteuerung durchgelassen werden. Im Fall eines erlaubten Bereichs einer Bildwiederholfrequenz von z.B. 48 bis 52 Hz entspricht der korrespondierenden Zeitdifferenzwertebereich 19,2 bis 20,8 ms. Der die kürzesten Zeitdifferenzwerte enthaltende Zeitdifferenzwertebereich ist derjenige, welcher einem Bereich der erlaubten höchsten Bildfrequenzen entspricht. Bei den erlaubten höchsten Bildfrequenzen kann es sich beispielsweise um 100 ± 2 Hz handeln.

Vorteilhafterweise sind die vorgegebenen Zeitdifferenzwertebereiche aus der folgenden Wertegruppe entnommen: 20 ± 0,8 ms, 16,7 ± 0,5 ms, 13,3 ± 0,4 ms, 10 ± 0,3 ms.

Bei dem Flachbildschirm kann es sich vorteilhafterweise um einen Plasmabildschirm handeln, bei dem von den Bildpunkten abgestrahltes Licht durch eine Gasentladung gebildet wird.

Nach einem weiteren Ausgestaltungsmerkmal weist der Flachbildschirm eine Eingangsschaltung zur Ansteuerung seiner Bildpunkte auf Die Eingangsschaltung kann für nicht zu den vorgegebenen Zeitdifferenzwertebereichen korrespondierende Bildwiederholfrequenzen sperren. Dadurch wird eine Beschädigung des Flachbildschirms durch Beaufschlagung ungeeigneter Bildwiederholfrequenzen vermieden.

Erfindungsgemäß ist ferner eine Vorrichtung zur Synchronisation einer von einer Schaltung zur Erzeugung digitaler Bildsignale für einen Flachbildschirm erzeugten Bildwiederholfrequenz vorgesehen, wobei die Bildwiederholfrequenz durch eine Abfolge von Impulsen bestimmt ist, mit
aa) einer Einrichtung zum Prüfen, ob eine erste Zeitdifferenz zwischen einem ersten und einem darauf folgenden zweiten Impuls einem Wert entspricht, der in einem von mehreren vorgegebenen Zeitdifferenzwertebereichen liegt,
bb) einer wahlweise ansteuerbaren Einrichtung zum Entfernen des zweiten Impulses und
cc) einer wahlweise ansteuerbaren Einrichtung zum Erzeugen eines neuen Impulses mit einer zweiten Zeitdifferenz zum vorhergehenden Impuls, wobei die zweite Zeitdifferenz in einen der vorgegebenen Zeitdifferenzwertebereiche fällt.

Die Vorrichtung schützt die Schaltung zur Erzeugung digitaler Bildsignale vor einer Beschädigung bei einer Änderung der Bildwiederholfrequenz. Trotz einer Änderung der Bildwiederholfrequenz ist ein kontinuierlicher Bildaufbau gewährleistet.

Nach einer ersten Ausgestaltungsform kann die zweite Zeitdifferenz in einen der Zeitdifferenzwertebereiche mit Ausnahme des die kürzesten Zeitdifferenz enthaltenden Zeitdifferenzwertebereichs fallen. In diesem Fall kann die vierte Zeitdifferenz in den die längsten oder kürzesten Zeitdifferenzen enthaltenden Zeitdifferenzwertebereich fallen.

Nach einer zweiten Ausgestaltung kann die zweite Zeitdifferenz in den die längsten Zeitdifferenz enthaltenden Zeitdifferenzwertebereich fallen. In diesem Fall kann die vierte Zeitdifferenz in den die längsten oder einen Zeitdifferenzwertebereich mit Ausnahme des die kürzesten Zeitdifferenzen enthaltenden Zeitdifferenzwertebereichs fallen.

Die vorgenannten Ausgestaltungen ermöglichen auf einfache Weise ein Umschalten von einer ersten Bildwiederholfrequenz auf eine zweite Bildwiederholfrequenz, wobei Zwischenfrequenzen vermieden werden.

Die vorgegebenen Zeitdifferenzwertebereiche können aus der folgenden Wertegruppe entnommen sein: 20 ± 0,8 ms, 16,7 ± 0,5 ms, 13,3 ± 0,4 ms, 10 ± 0,3 ms. Die vorgenannten Zeitdifferenzwertebereiche korrespondieren zu geeigneten Bildwiederholfrequenzbereichen.

Bei dem Flachbildschirm kann es sich um einen Plasmabildschirm handeln, bei dem von den Bildpunkten abgestrahltes Licht durch Gasentladung gebildet wird. Vorteilhafterweise weist der Flachbildschirm eine Eingangsschaltung zur Ansteuerung der Bildpunkte auf, wobei die Eingangschaltung für nicht zu den vorgegebenen Zeitdifferenzwertebereichen korrespondierende Bildwiederholfrequenzen sperrt. So wird eine Beschädigung oder Zerstörung des Flachbildschirms durch unzulässige Zwischenfrequenzen vermieden.

Als besonders vorteilhaft wird es angesehen, dass das wahlweise Ansteuern der Einrichtung zum Entfernen und der Einrichtung zum Erzeugen automatisch gemäß einem vorgegebenen Programm erfolgt.

Nachfolgend wird die Erfindung an Hand zweier Ausführungsbeispiele näher erläutert. Hierin zeigen:
- Fig. 1: schematisch die Funktionsweise des Verfahrens beim Umschalten der Bildwiederholfrequenz von 50 Hz auf 60 Hz.
- Fig. 2: die Funktionsweise des Verfahrens beim Umschalten der Bildwiederhalfrequenz von 60 Hz auf 50 Hz.

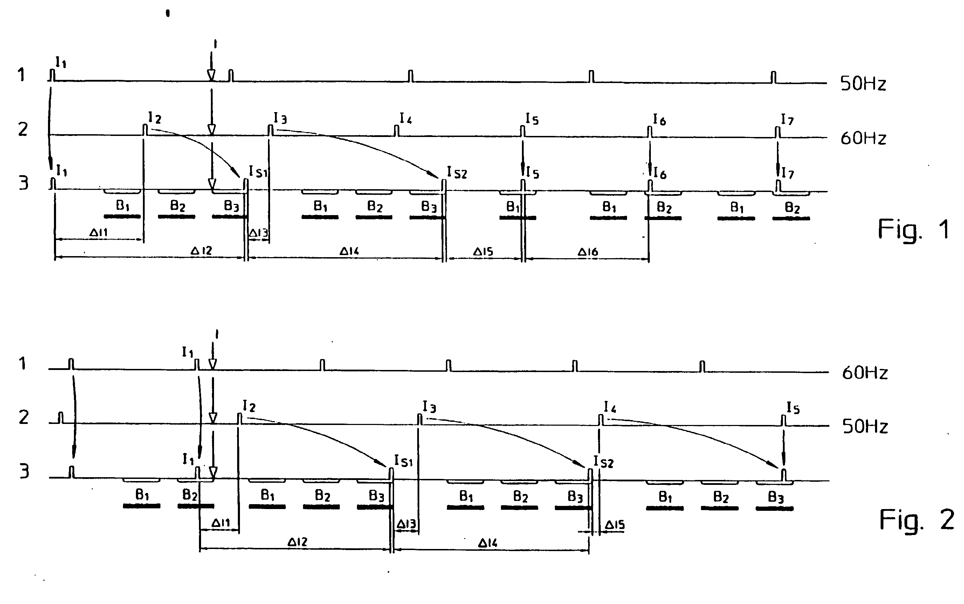

In den Fig. 1 und 2 ist mit 1 eine erste Bildwiederholfrequenz und mit 2 eine zweite Bildwiederholfrequenz bezeichnet. Mit 3 ist jeweils die Ausgangsbildwiederholfrequenz bezeichnet, welche auf eine Eingangsschaltung zur Ansteuerung der Bildpunkte eines Flachbildschirms gelegt wird. Mit B1, B2 und B3 sind die erlaubten Zeitdifferenzwertebereiche bezeichnet.

In Fig. 1 beträgt die erste Bildwiederholfrequenz 50 Hz. Zum Umschaltzeitpunkt t wird auf die zweite Bildwiederholfrequenz 2 von 60 Hz umgeschaltet.

Vor dem Umschalten wird ein von der Schaltung gelieferter erster Impuls I1 der ersten Bildwiederholfrequenz 1 unmittelbar als Ausgangsbildwiederholfrequenz 3 an eine Schnittstelle des Flachbildschirms weitergegeben. Ausgehend von jedem auf die Ausgangsbildwiederholfrequenz 3 abgegbenen Impuls I1, .. wird eine Zeitmessung gestartet. Dabei wird geprüft, ob eine erste Zeitdifferenz Δt1 zu einem nächst folgenden Impuls I2 in einen von mehreren Zeitdifferenzwertebereichen B1, B2, B3 fällt. Mit B1 ist derjenige Zeitdifferenzwertebereich bezeichnet, in den die kürzesten Zeitdifferenzen gegenüber dem ersten Impuls I1 fallen.

Sofern Δt1 nicht in einen der vorgegebenen Zeitdifferenswertebereiche B1, B2, B3 fällt, wird mit einer geeigneten Einrichtung ein neuer Impuls IS1 erzeugt, dessen zweite Zeitdifferenz Δt2 zum ersten Impuls I1 in den die längsten Zeitdifferenzwerte enthaltenden Zeitdifferenzwertebereich B3 fällt.

Ausgehend von diesem neuen Impuls IS1 wird wiederum die vorgenannte Prüfung durchgeführt. Ein dritter Impuls I3, dessen dritte Zeitdifferenz Δt3 zum neuem Impuls IS1 nicht in einen der Zeitdifferenzwertebereiche B1, B2, B3 fällt wird entfernt und durch einen weiteren neuen Impuls IS2 ersetzt, dessen vierte Zeitdifferenz Δt4 zum neuen Impuls IS1 in den Zeitdifferenzwertebereich B3 fällt.

Ausgehend von dem weiteren neuen Impuls IS2 wird wiederum die vorerwähnte Prüfung durchgeführt. Dabei fällt im konkreten Beispiel eine fünfte Zeitdifferenz Δt5 zu einem fünften Impuls I5 in den die kürzesten Zeitdifferenzen enthaltenden ersten Zeitdifferenzwertebereich B1. Der fünfte Impuls I5 wird also unmittelbar auf die Schnittstelle weitergegeben.

Ausgehend vom fünften Impuls wird wiederum die vorgenannte Prüfung durchgeführt. Im konkreten Beispiel fällt eine sechste Zeitdifferenz zu einem sechsten Impuls I6 in den zweiten Zeitdifferenzwertebereich B2. Der sechste Impuls I6 wird ebenfalls unmittelbar auf die Schnittstelle weitergegeben.

Mit dem vorgenannten Verfahren wird sichergestellt, dass keine Bildwiederholfrequenzen auf die Schnittstelle weitergegeben werden, die nicht in einen der vorgegebenen Zeitdifferenzwertebereiche B1, B2 oder B3 fallen. Da die Zeitdifferenzwertebereiche B1, B2 und B3 mit den erlaubten Bildwiederholfrequenzen des Flachbildschirms korreliert sind, gelangen keine Impulsfolgen auf die Schnittstelle, für die eine Eingangsschaltung des Flachbildschirms sperrt. Eine Beschädigung oder Zerstörung der die digitalen Bildsignale erzeugenden Schaltung wird vermieden.

Fig. 2 zeigt in analoger Weise zu Fig. 1 das Umschalten einer Bildwiederhalfrequenz von 60Hz auf 50Hz.

### Bezugszeichenliste

- 1: erste Bildwiederholfrequenz
- 2: zweite Bildwiederholfrequenz
- 3: Ausgangsbildwiederholfrequenz
- I1,2,3: erster, zweiter, dritter Impuls
- IS1,2: erster, zweiter neuer Impuls
- B1,2,3: erster, zweiter, dritter Zeitdifferenzwertebereich
- t: Umschaltzeitpunkt
- Δt1,2,3: erste, zweite, dritte Zeitdifferenz

## Patentansprüche

1. Verfahren zur Anpassung eines Flachbildschirms an eine mittels einer Schaltung zur Erzeugung digitaler Bildsignale erzeugten Bildwiederholfrequenz, wobei die Bildwiederholfrequenz durch eine Abfolge von Impulsen bestimmt wird, mit folgenden Schritten:
a) Prüfen, ob eine erste Zeitdifferenz (Δt1) zwischen einem von der Schaltung zur Erzeugung digitaler Bildsignale gelieferten ersten (I1) und einem darauf folgenden zweiten Impuls (I2) einem Wert entspricht, der in einem von mehreren vorgegebenen Zeitdifferenzwertebereichen (B1,...,Bn) liegt,
bejahendenfalls: Wiederholung von Schritt a),
verneinendenfalls:
b1) Entfernen des zweiten Impulses (I2) und
b2) Erzeugen eines neuen Impulses (IS1) mit einer zweiten Zeitdifferenz (Δt2) zum ersten Impuls (I1), wobei die zweite Zeitdifferenz (Δt2) in einen der vorgegebenen Zeitdifferenzwertebereiche (B1,...,Bn) fällt,
c) Prüfen, ob eine dritte Zeitdifferenz (Δt3) zwischen dem neuen Impuls (IS1) und dem nächsten von der Schaltung zur Erzeugung digitaler Bildsignale gelieferten Impuls (In) einem Wert entspricht, der in einem der vorgegebenen Zeitdifferenzwertebereiche (B1,...,Bn) liegt,
bejahendenfalls: Rückkehr zum Schritt a)
verneinendenfalls:
d1) Entfernen des nächsten Impulses (In) und
d2) Erzeugen eines weiteren neuen Impulses (IS2) mit einer vierten Zeitdifferenz (Δt4) zum neuen Impuls (IS1), wobei die vierte Zeitdifferenz (Δt4) in einen der vorgegebenen Zeitdifferenzwertebereiche (B1,...,Bn) fällt, und
e) übernehmen des weiteren neuen Impulses (IS2) als neuen Impuls (IS1) und Rückkehr zum Schritt c).

2. Verfahren nach Anspruch 1, wobei die zweite Zeitdifferenz (Δt2) in einen der Zeitdifferenzwertebereiche (B1,..., Bn) mit Ausnahme des die kürzesten Zeitdifferenzen enthaltenden Zeitdifferenzwertebereichs (B1) fällt.

3. Verfahren nach Anspruch 1, wobei die zweite Zeitdifferenz (Δt2) in den die längsten Zeitdifferenzen enthaltenden Zeitdifferenzwertebereich (Bn) fällt.

4. Verfahren nach einem der vorhergehenden Ansprüche, wobei die vierte Zeitdifferenz (Δt4) in den die längsten Zeitdifferenzen enthaltenden Zeitdifferenzwertebereich (Bn) fällt.

5. Verfahren nach einem der Ansprüche 1 bis 3, wobei die vierte Zeitdifferenz (Δt4) in einen Zeitdifferenzwertebereich (B1,...Bn) mit Ausnahme des die kürzesten Zeitdifferenzen enthaltenden Zeitdifferenzwertebereichs (B1) fällt.

6. Verfahren nach einem der vorhergehenden Ansprüche, wobei die vorgegebenen Zeitdifferenzwertebereiche (B1,...,Bn) aus der folgenden Wertegruppe entnommen sind: 20 ± 0,8 ms, 16,7 ± 0,5 ms, 13,3 ± 0,4 ms, 10 ± 0,3 ms.

7. Verfahren nach einem der vorhergehenden Ansprüche, wobei der Flachbildschirm ein Plasmabildschirm ist, bei dem von den Bildpunkten abgestrahltes Licht durch Gasentladung gebildet wird.

8. Verfahren nach einem der vorhergehenden Ansprüche, wobei der Flachbildschirm eine Eingangsschaltung zur Ansteuerung seiner Bildpunkte aufweist.

9. Verfahren nach Anspruch 8, wobei die Eingangsschaltung Bildfrequenzen sperrt, welche nicht zu den vorgegebenen Zeitdifferenzwertebereichen (B1,...,Bn) korrespondieren.

10. Vorrichtung zur Anpassung eines Flachbildschirms an eine mittels einer von einer Schaltung zur Erzeugung digitaler Bildsignale erzeugten Bildwiederholfrequenz, wobei die Bildwiederholfrequenz durch eine Abfolge von Impulsen (I1, I2,...,In) bestimmt ist, aufweisend
aa) eine Einrichtung zum Prüfen, ob eine erste Zeitdifferenz (Δt1) zwischen einem ersten (I1) und einem darauf folgenden zweiten Impuls (I2) einem Wert entspricht, der in einem von mehreren vorgegebenen Zeitdifferenzwertebereichen (B1,...,Bn) liegt,
bb) eine wahlweise ansteuerbare Einrichtung zum Entfernen des zweiten Impulses (I2, In) und
cc) eine wahlweise ansteuerbare Einrichtung zum Erzeugen eines neuen Impulses (IS1, IS2) mit einer zweiten Zeitdifferenz zum vorhergehenden Impuls; wobei die zweite Zeitdifferenz in einen der vorgegebenen Zeitdifferenzwertebereiche (B1,...,Bn) fällt.

11. Vorrichtung nach Anspruch 10, wobei die zweite Zeitdifferenz in einen der Zeitdifferenzwertebereiche mit Ausnahme des die kürzesten Zeitdifferenzen enthaltenden Zeitdifferenzwertebereichs (B1) fällt.

12. Vorrichtung nach Anspruch 10, wobei die zweite Zeitdifferenz in den die längsten Zeitdifferenzen enthaltenden Zeitdifferenzwertebereich (Bn) fällt.

13. Vorrichtung nach einem der Ansprüche 10 bis 12, wobei die vorgegebenen Zeitdifferenzwertebereiche (B1,...,Bn) aus der folgenden Wertegruppe entnommen sind: 20 ± 0,8 ms, 16,7 ± 0,5 ms, 13,3 ± 0,4 ms, 10 ± 0,3 ms.

14. Vorrichtung nach einem der Ansprüche 10 bis 13, wobei der Flachbildschirm ein Plasmabildschirm ist, bei dem von den Bildpunkten abgestrahltes Licht durch Gasentladung gebildet wird.

15. Vorrichtung nach einem der Ansprüche 10 bis 14, wobei der Flachbildschirm eine Eingangsschaltung zur Ansteuerung der Bildpunkte aufweist.

16. Vorrichtung nach Anspruch 15, wobei die Eingangsschaltung Bildwiederholfrequenzen sperrt die nicht mit den vorgegebenen Zeitdifferenzwertebereichen korrespondieren.

17. Vorrichtung nach einem der vorhergehenden Ansprüche 10 bis 16, wobei das wahlweise Ansteuern der Einrichtung zum Entfernen des zweiten Impulses und der Einrichtung zum Erzeugen eines neuen Impulses automatisch gemäß einem vorgegebenen Programm erfolgt.

## Claims

1. Method of adapting a flat screen to a picture refresh rate which is generated by means of a circuit to generate digital picture signals, the picture refresh rate being determined by a sequence of pulses, with the following steps:
a) test whether a first time difference (Δt1) between a first pulse (I1) which is supplied by the circuit to generate digital picture signals and a second pulse (12) which follows it corresponds to a value which is in one of multiple specified time difference value ranges (B1, ..., Bn),
in the positive case: repeat Step a),
in the negative case:
b1) remove the second pulse (I2) and
b2) generate a new pulse (IS1) with a second time difference (Δt2) from the first pulse (I1), the second time difference (Δt2) falling into one of the specified time difference value ranges (B1, ..., Bn),
c) test whether a third time difference (Δt3) between the new pulse (IS1) and the next pulse (In) which the circuit to generate digital picture signals supplies corresponds to a value which is in one of the specified time difference value ranges (B1, ..., Bn),
in the positive case: return to Step a),
in the negative case:
d1) remove the next pulse (In) and
d2) generate a further new pulse (IS2) with a fourth time difference (Δt4) from the new pulse (IS1), the fourth time difference (Δt4) falling into one of the specified time difference value ranges (B1, ..., Bn), and
e) accept the further new pulse (IS2) as a new pulse (IS1) and return to Step c).

2. Method according to Claim 1, wherein the second time difference (Δt2) falls into one of the time difference value ranges (B1, ..., Bn), with the exception of the time difference value range (B1) which contains the shortest time differences.

3. Method according to Claim 1, wherein the second time difference (Δt2) falls into the time difference value range (Bn) which contains the longest time differences.

4. Method according to one of the preceding claims, wherein the fourth time difference (Δt4) falls into the time difference value range (Bn) which contains the longest time differences.

5. Method according to one of Claims 1 to 3, wherein the fourth time difference (Δt4) falls into a time difference value range (B1, ..., Bn), with the exception of the time difference value range (B1) which contains the shortest time differences.

6. Method according to one of the preceding claims, wherein the specified time difference value ranges (B1, ..., Bn) are taken from the following value group: 20 ± 0.8 ms, 16.7 ± 0.5 ms, 13.3 ± 0.4 ms, 10 ± 0.3 ms.

7. Method according to one of the preceding claims, wherein the flat screen is a plasma screen, in which light which the pixels radiate is formed by gas discharge.

8. Method according to one of the preceding claims, wherein the flat screen has an input circuit for driving its pixels.

9. Method according to Claim 8, wherein the input circuit blocks picture frequencies which do not correspond to the specified time difference value ranges (B1, ..., Bn).

10. Device for adapting a flat screen to a picture refresh rate which is generated by means of a circuit to generate digital picture signals, the picture refresh rate being determined by a sequence of pulses (I1, I2, ..., In), having
aa) a device to test whether a first time difference (Δt1) between a first pulse (I1) and a second pulse (I2) which follows it corresponds to a value which is in one of multiple specified time difference value ranges (B1, ..., Bn),
bb) an optionally drivable device to remove the second pulse (12, In), and
cc) an optionally drivable device to generate a new pulse (IS1, IS2) with a second time difference from the preceding pulse, the second time difference falling into one of the specified time difference value ranges (B1, ..., Bn).

11. Device according to Claim 10, wherein the second time difference falls into one of the time difference value ranges, with the exception of the time difference value range (B1) which contains the shortest time differences.

12. Device according to Claim 10, wherein the second time difference falls into the time difference value range (Bn) which contains the longest time differences.

13. Device according to one of Claims 10 to 12, wherein the specified time difference value ranges (B1, ..., Bn) are taken from the following value group: 20 ± 0.8 ms, 16.7 ± 0.5 ms, 13.3 ± 0.4 ms, 10 ± 0.3 ms.

14. Device according to one of Claims 10 to 13, wherein the flat screen is a plasma screen, in which light which the pixels radiate is formed by gas discharge.

15. Device according to one of Claims 10 to 14, wherein the flat screen has an input circuit for driving the pixels.

16. Device according to Claim 15, wherein the input circuit blocks picture refresh rates which do not correspond to the specified time difference value ranges.

17. Device according to one of the preceding Claims 10 to 16, wherein the optional driving of the device to remove the second pulse and the device to generate a new pulse takes place automatically according to a specified program.

## Revendications

1. Procédé d'adaptation d'un écran plat à une fréquence de récurrence d'image générée grâce à un circuit de génération de signaux d'images numériques, dans lequel la fréquence de récurrence d'image est déterminée par une suite d'impulsions, comportant les étapes suivantes :
a) vérifier si une première différence de temps (Δt1) entre le première impulsion (I1) délivrée par le circuit de génération de signaux d'images numériques et une seconde impulsion (I2) la suivant correspond à une valeur, qui se trouve dans une de plusieurs plages de valeurs de différence de temps prédéterminées (B1,...,Bn),
dans le cas d'une réponse positive : répétition de l'étape a),
dans le cas d'une réponse négative :
b1) supprimer la seconde impulsion (12) et
b2) générer une nouvelle impulsion (IS1) avec une seconde différence de temps (Δt2) par rapport à la première impulsion (I1), où la seconde différence de temps (Δt2) se trouve dans une des plages de valeurs de différence de temps prédéterminées (B1,...,Bn),
c) vérifier si la troisième différence de temps (Δt3) entre la nouvelle impulsion (IS1) et l'impulsion suivante (In) délivrée par le circuit de génération de signaux d'images numériques correspond à une valeur, qui se trouve dans une des plages de valeurs de différence de temps prédéterminées (B1,...,Bn),
dans le cas d'une réponse positive : retour à l'étape a)
dans le cas d'une réponse négative :
d1) supprimer l'impulsion suivante (In) et
d2) générer une autre nouvelle impulsion (IS2) avec une quatrième différence de temps (Δt4) par rapport à la nouvelle impulsion (IS1), où la quatrième différence de temps (Δt4) se trouve dans une des plages de valeurs de différence de temps prédéterminées (B1,...,Bn), et
e) accepter la nouvelle impulsion (IS2) en tant que nouvelle impulsion (IS1) et retour à l'étape c).

2. Procédé selon la revendication 1, dans lequel la seconde différence de temps (Δt2) se trouve dans l'une des plages de valeurs de différence de temps (B1,...,Bn) à l'exception de la plage de valeurs de différence de temps (B1) contenant les plus petites différences de temps.

3. Procédé selon la revendication 1, dans lequel la seconde différence de temps (Δt2) se trouve dans la plage de valeurs de différence de temps (Bn) contenant les différences de temps les plus longues.

4. Procédé selon l'une des revendications précédentes, dans lequel la quatrième différence de temps (Δt4) se trouve dans la plage de valeurs de différence de temps (Bn) contenant les différences de temps les plus longues.

5. Procédé selon l'une des revendications 1 à 3, dans lequel la quatrième différence de temps (Δt4) se trouve dans une plage de valeurs de différence de temps (B1,...,Bn) à l'exception de la plage de valeurs de différence de temps (B1) contenant les différences de temps les plus courtes.

6. Procédé selon l'une des revendications précédentes, dans lequel les plages de valeurs de différence de temps prédéterminées (B1,...,Bn) sont prélevées du groupe de valeurs suivant : 20 ± 0,8 ms, 16,7 ± 0,5 ms, 13,3 ± 0,4 ms, 10 ± 0,3 ms.

7. Procédé selon l'une des revendications précédentes, dans lequel l'écran plat est un écran plasma, la lumière rayonnée par les points d'image est formée par décharge de gaz.

8. Procédé selon l'une des revendications précédentes, dans lequel l'écran plat présente un circuit d'entrée pour commander ses points d'image.

9. Procédé selon la revendication 8, dans lequel le circuit d'entrée bloque les fréquences d'images, qui ne correspondent pas aux plages de valeurs de différence de temps prédéterminées (B1,...,Bn).

10. Dispositif d'adaptation d'un écran plat à une fréquence de récurrence d'image générée par un circuit de génération de signaux d'images numériques, dans lequel la fréquence de récurrence d'image est déterminée par une suite d'impulsions (I1, I2, ..., In), présentant
aa) un dispositif pour vérifier, si une première différence de temps (Δt1) entre une première (I1) et une seconde impulsion la suivant (12) correspond à une valeur, qui se trouve dans une de plusieurs plages de valeurs de différence de temps prédéterminées (B1,...,Bn),
bb) un dispositif pouvant être commandé au choix pour supprimer la seconde impulsion (I2, In) et
cc) un dispositif pouvant être commandé au choix pour générer une nouvelle impulsion (IS1, IS2) comportant une seconde différence de temps par rapport à l'impulsion précédente, où la seconde différence de temps se trouve dans une des plages de valeurs de différence de temps prédéterminées (B1,...,Bn).

11. Dispositif selon la revendication 10, dans lequel une seconde différence de temps se trouve dans une des plages de valeurs de différence de temps à l'exception de la plage de valeurs de différence de temps (B1) contenant les différences de temps les plus courtes.

12. Dispositif selon la revendication 10, dans lequel la seconde différence de temps se trouve dans la plage de valeurs de différence de temps (Bn) contenant les différences de temps les plus longues.

13. Dispositif selon l'une des revendications 10 à 12, dans lequel les plages de valeurs de différence de temps prédéterminées (B1,...,Bn) sont prélevées du groupe de valeurs suivant : 20 ± 0, ms, 16,7 ± 0,5 ms, 13,3 3 ± 0,4 ms, 10 ± 0,3 ms.

14. Dispositif selon une revendication 10 à 13, dans lequel l'écran plat est un écran plasma, dans lequel la lumière rayonnée par les points d'image est formée par décharge de gaz.

15. Dispositif selon l'une des revendications 10 à 14, dans lequel l'écran plat présente un circuit d'entrée pour commander les points d'image.

16. Dispositif selon la revendication 15, dans lequel le circuit d'entrée bloque les fréquences de récurrence d'images qui ne correspondent pas aux plages de valeurs de différence de temps prédéterminées.

17. Dispositif selon une des revendications 10 à 16, dans lequel la commande au choix du dispositif pour supprimer la seconde impulsion et du dispositif de génération d'une nouvelle impulsion est effectuée automatiquement selon un programme prédéterminé.
